(19) **Europäisches Patentamt**
**European Patent Office**
**Office européen des brevets**

(11) **EP 1 983 708 B1**

(12) **EUROPEAN PATENT SPECIFICATION**

(45) Date of publication and mention
of the grant of the patent:
**27.06.2012 Bulletin 2012/26**

(51) Int Cl.:
*H04L 25/02* (2006.01)     *H04L 25/03* (2006.01)

(21) Application number: **08007576.5**

(22) Date of filing: **18.04.2008**

(54) **Method and apparatus for generating training sequence codes in a communication system**

Verfahren und Vorrichtung zur Erzeugung von Trainingssequenzcodes in einem Kommunikationssystem

Procédé et appareil pour générer des codes de séquence de formation dans un système de communication

(84) Designated Contracting States:
**DE FR GB IT NL**

(30) Priority: **18.04.2007 KR 20070038090**

(43) Date of publication of application:
**22.10.2008 Bulletin 2008/43**

(73) Proprietor: **Samsung Electronics Co., Ltd**
**Suwon-si, Gyeonggi-do 443-742 (KR)**

(72) Inventors:
• **Xin, Yan**
**Suwon-si**
**Gyeonggi-do (KR)**
• **Choi, Jong-Soo**
**Suwon-si**
**Gyeonggi-do (KR)**

(74) Representative: **Grünecker, Kinkeldey,**
**Stockmair & Schwanhäusser**
**Leopoldstrasse 4**
**80802 München (DE)**

(56) References cited:
• HAFEEZ A ET AL: "Interference cancellation for EDGE via two-user joint demodulation" 20031006; 20031006 - 20031009, 6 October 2003 (2003-10-06), pages 1025-1029Vol.2, XP010700987
• STEINER B ET AL: "OPTIMUM AND SUBOPTIMUM CHANNEL ESTIMATION FOR THE UPLINK OF CDMA MOBILE RADIO SYSTEMS WITH JOINT DETECTION" EUROPEAN TRANSACTIONS ON TELECOMMUNICATIONS AND RELATEDTECHNOLOGIES, AEI, MILANO, IT, vol. 5, no. 1, 1 January 1994 (1994-01-01), pages 39-50, XP000445714 ISSN: 1120-3862
• "Digital cellular telecommunications system (Phase 2+); Multiplexing and multiple access on the radio path (3GPP TS 45.002 version 6.11.0 Release 6); ETSI TS 145 002" ETSI STANDARDS, LIS, SOPHIA ANTIPOLIS CEDEX, FRANCE, vol. 3-G1, no. V6.11.0, 1 September 2005 (2005-09-01), XP014032087 ISSN: 0000-0001

**Description**

**BACKGROUND OF THE INVENTION**

1. Field of the Invention

The present invention relates generally to a method and apparatus for generating training sequence codes in a communication system, and in particular, to a method and apparatus for generating training sequence codes in a Global System for Mobile Communication (GSM)/Enhanced Data Rates for GSM Evolution (EDGE) Evolution Radio Access Network (RAN) (hereinafter referred to as 'GERAN') system.

2. Description of the Related Art

Currently, the 3rd Generation Partnership Project (3GPP) Technical Specification Group (TSG)-GERAN standard conference is proceeding with GERAN Evolution for improving performance such as data transmission rate (or data rate) and spectral efficiency. As such, 16-ary Quadrature Amplitude Modulation (QAM) and 32-QAM, which are high-order QAM modulation schemes for improving downlink and uplink performances are added to Gaussian Minimum Shift Keying (GMSK) and Phase Shift Keying (8-PSK), which are the conventional modulation schemes.

Further, in order to increase data rate and spectral efficiency, for a symbol rate, a new rate of 325 Ksymbols/s is added to the existing rate of 270.833 Ksymbols/s. The new symbol rate, which is increased 1.2 times from the existing symbol rate, is applied to both the uplink and downlink, and will likely be reflected in the GERAN standard.

As described above, in the conventional GERAN system, the GMSK and 8-PSK modulation schemes are applied as modulation schemes. The GMSK scheme, a scheme for restricting a bandwidth by passing binary data through a Gaussian Low Pass Filter (LPF) and then performing frequency modulation thereon in a predetermined shift ratio, has excellent spectral concentrativeness and high out-band spectral suppression as it enables a continuous change between two frequencies. The 8-PSK scheme, a scheme for modulating data so that it is mapped to a phase-shifted code of a carrier, can increase frequency efficiency. There are nine types of techniques for Packet Data Traffic CHannels (PDTCH) defined as a coding scheme used in the EDGE/EGPRS system. The nine types of techniques include nine types of Modulation and Coding Schemes (MCSs) MCS-1 to MCS-9 for EDGE/EGPRS. In actual communication, one of the various combinations of the modulation schemes and the coding techniques is selected and used. MCS-1 to MCS-4 use the GMSK modulation scheme and MCS-5 to MCS-9 use the 8-PSK modulation scheme. An MCS scheme used for transmission is determined according to the measured channel quality.

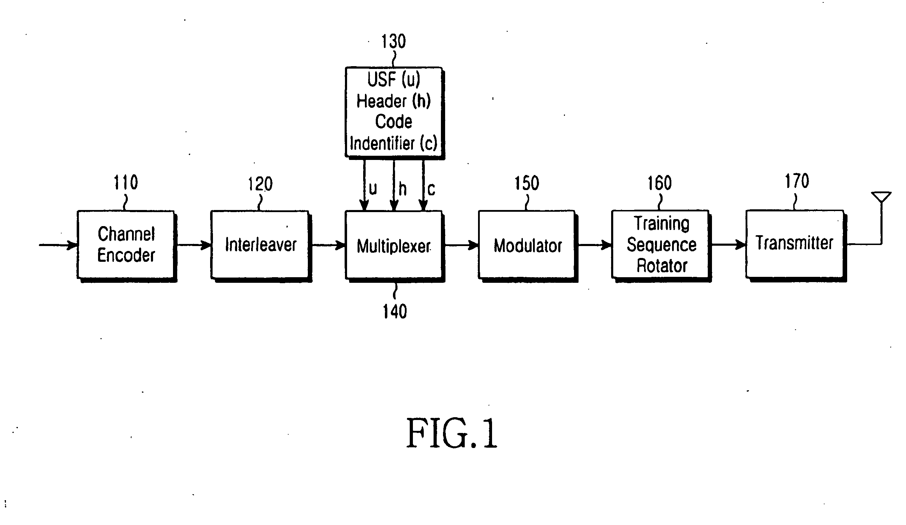

FIG. 1 illustrates a downlink transmitter's structure of a conventional GERAN system. Referring to FIG. 1, a Radio Link Control (RLC) packet data block (RLC Block) is sent to a channel encoder 110 where it is encoded by a convolutional code, punctured according to a predetermined puncturing pattern, and then is sent to an interleaver 120. The data that underwent interleaving in the interleaver 120 is sent to a multiplexer 140 in order to allocate data on a physical channel. In addition, RLC/MAC header information, Uplink State Flag (USF) and Code Identifier bits 130 are also sent to the multiplexer 140. The multiplexer 140 distributes the collected data over 4 normal bursts, and allocates each of the bursts to a time slot of a Time Division Multiple Access (TDMA) frame. Data of each burst is modulated by a modulator 150. A Training Sequence Code (TSC) is added to the data in a training sequence rotator 160 and then the TSC-added data is sent to a transmitter 170 after undergoing phase rotation. A detailed description of the devices additionally needed to transmit the modulated signal, for example, an Analog-to-Digital (A/D) converter, will be omitted herein for simplicity.

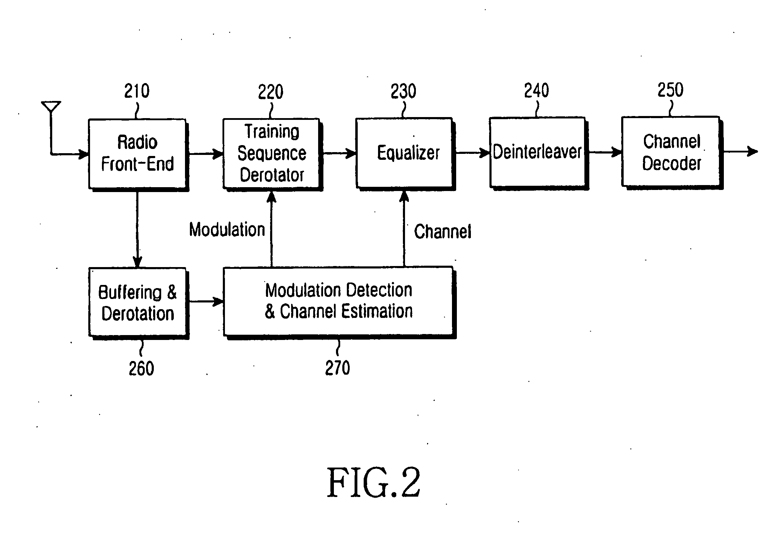

FIG. 2 illustrates a receiver structure of a conventional GERAN system. Referring to FIG. 2, the transmitted bursts are received at a radio front-end unit 210 via a receive antenna in units of time slots. The received data is sent to a training sequence derotator 220 and a buffering & derotation unit 260. The received data undergoes buffering and phase derotation in the buffering and derotation unit 260. A modulation scheme detection and channel estimation unit 270 detects a modulation scheme and estimates channel information using the data output from the buffering and derotation unit 260. In the training sequence derotator 220, phase derotation corresponding to the operation in the training sequence rotator 160 of the transmitter is performed on the received data. In an equalizer 230, the received data is equalized and demodulated based on the modulation scheme and channel information detected and estimated by the modulation scheme detection and channel estimation unit 270, and is then transferred to a deinterleaver 240 for deinterleaving. The deinterleaved data is transferred to a channel decoder 250 that restores the transferred data.

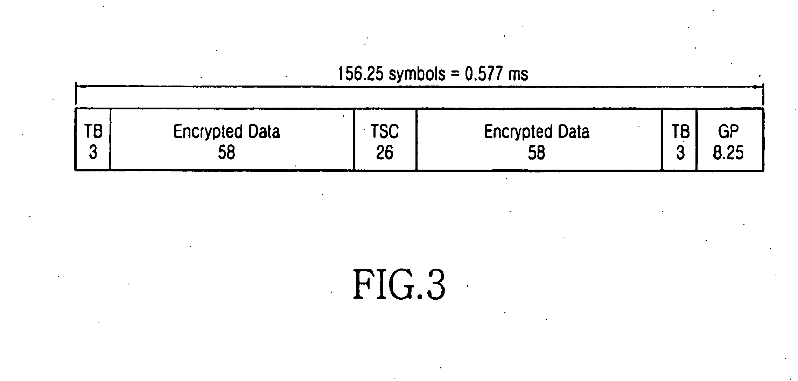

FIG. 3 illustrates a structure of a normal burst used in a conventional GERAN system. As illustrated in FIG. 3, in the conventional GERAN system, a TSC composed of 26, 30, or 31 symbols is located in the center of the normal burst structure. 8 types of TSCs are defined in the standard, and actually used for the GSM network and terminal, and one same TSC is allocated in one cell. In a receiver, the TSC is used in an equalizer that cancels noise and interference included in the received signal by estimating radio channel state information. The receiver measures a channel quality or link quality using the TSC and makes a report, so that a transmitter can perform Link Quality Control (LQC).

When the new rate of 325 Ksymbols/s is applied as described above, a new burst structure that is similar in form to that of FIG. 3 should be used. For a detailed burst structure, reference can be made to Korean Patent Application No. 2007-12752. FIG. 4 illustrates, as an example of a new burst structure, a normal burst structure in which 31 symbols are used as a TSC. The conventional TSC is comprised of codes having excellent periodic autocorrelation properties. Therefore, the conventional TSC has good properties when it performs channel estimation on one channel without considering inter-channel interference. However, when a cell structure is designed in the cellular system, carrier frequencies are reused at sufficiently long intervals taking Co-Channel Interference (CCI) into account. However, as the reuse frequency of the carrier frequencies increases, the CCI increases, and the increase in the CCI has a significant influence on the channel estimation and signal detection performances. Therefore, in the cellular system such as GSM, when there is a significant CCI, it is preferable to estimate a correct channel using a joint channel estimation method. In this case, the cross-correlation properties between TSCs have a considerable influence on the performance of the joint channel estimation method. However, the currently used TSCs of GERAN, which adopt the design scheme where the cross-correlation properties have never been considered, reduce system performance in the CCI environment, and also can decrease system performance when the conventional TSC is applied on an extended basis to the high-order modulation scheme such as 16-QAM and 32-QAM adopted in the GERAN Evolution system.

Further, in the synchronous networks, a symbol delay of an interferer burst is variable from -1 symbol to +4 symbols. Therefore, the influence of interfering TSC symbol delays on autocorrelation and cross-correlation properties should be considered during TSC design.

HAFEEZ A ET AL: "Interference cancellation for EDGE via two-user joint demodulation" 20031006; 20031006 - 20031009, 6 October 2003 (2003-10-06), pages 1025-1029Vol.2, discloses the use of joint demodulation for a burst-synchronous GSM/EDGE system to cancel a dominant co-channel or adjacent channel interferer. Eight training sequences are used, which are designed for good autocorrelation properties. However, some of the sequences do not exhibit good cross-correlation properties. The performance of various receivers is shown to depend on the training sequences.

STEINER B ET AL: "OPTIMUM AND SUBOPTIMUM CHANNEL ESTIMATION FOR THE UPLINK OF CDMA MOBILE RADIO SYSTEMS WITH JOINT DETECTION" EUROPEAN TRANSACTIONS ON TELECOMMUNICATIONS AND RELATEDTECHNOLOGIES, AEI, MILANO, IT, vol. 5, no. 1, 1 January 1994 (1994-01-01), pages 39-50, ISSN: 1120-3862 discloses a method for generating midamble codes, where the midamble codes of a code set are derived from a single basic code.

"Digital cellular telecommunications system (Phase 2+); Multiplexing and multiple access on the radio path (3GPP TS 45.002 version 6.11.0 Release 6); ETSI TS 145 002" ETSI STANDARDS, LIS, SOPHIA ANTIPOLIS CEDEX, FRANCE, vol. 3-G1, no. V6.11.0, 1 September 2005 (2005-09-01), ISSN: 0000-0001 discloses the use of 8 TSCs of length 26 bits. Each of the eight sequences is constructed by adding a guard sequence.

It is the object of the present invention to provide an improved method for generating a training sequence code in a communication system.

This object is solved by the subject matter of the independent claims.

Preferred embodiments are defined by the dependent claims.

The present invention has been designed to address at least the problems and/or disadvantages and to provide at least the advantages described below. Accordingly, an aspect of the present invention is to provide a method and apparatus for generating TSCs of a symbol length 26 having cross-correlation properties based on the TSC structure used in the conventional GERAN system.

Another aspect of the present invention is to provide a method and apparatus for generating new TSCs of symbol lengths 30 and 31 to be applied to an improved data rate (325 Ksymbols/s) based on the TSC structure used in the conventional GERAN system.

In accordance with one aspect of the present invention, there is provided a method for generating a training sequence code (TSC) in a communication system. The method includes obtaining a full set of training sequence code candidates through joint channel estimation with consideration of a symbol delay of an interfering signal; optimizing cross-correlation properties for the full set; obtaining a subset for necessary training sequence codes among the training sequence code candidates; defining each of training sequence codes in the obtained subset as a reference sequence; and generating optimized training sequence codes by copying symbols of a predetermined number of bits located in the front of the reference sequence, arranging the copied symbols in Most Significant Positions (MSPs) as a guard sequence, copying symbols of a predetermined number of bits located in the rear of the reference sequence, and arranging the copied symbols in Least Significant Positions (LSPs) as a guard sequence.

**BRIEF DESCRIPTION OF THE DRAWINGS**

The above and other aspects, features, and advantages of the present invention will become more apparent from the following detailed description when taken in conjunction with the accompanying drawings in which:

FIG. 1 is a diagram illustrating a downlink transmitter's structure of a conventional GERAN system;

FIG. 2 is a diagram illustrating a receiver structure of a conventional GERAN system;

FIG. 3 is a diagram illustrating a structure of a normal burst of a TSC symbol length 26 used in a conventional GERAN system;

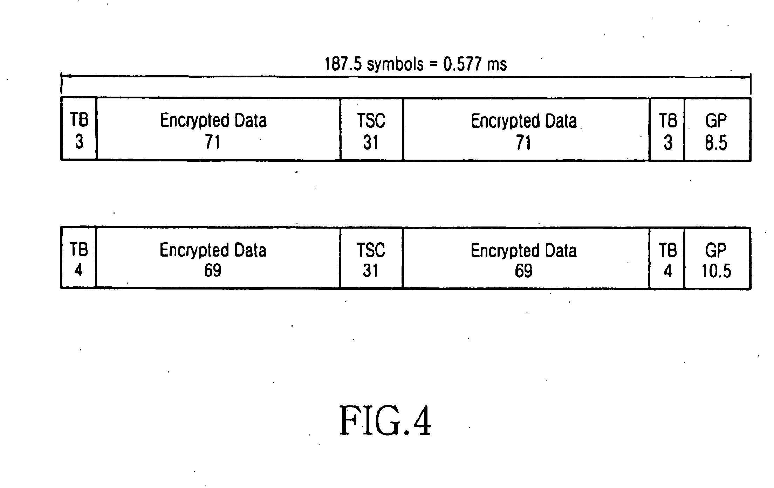

FIG. 4 is a diagram illustrating a normal burst structure of a TSC symbol length 31 suitable for high-speed data transmission;

FIG. 5 is a diagram illustrating a TSC structure used in the conventional GSM/EDGE system;

FIG. 6 is a diagram illustrating a training sequence code structure of a symbol length 30 constructed by extending the conventional training sequence code structure;

FIG. 7A is a diagram illustrating a training sequence code structure of a symbol length 31 constructed by modifying the training sequence code structure illustrated in FIG. 6;

FIG. 7B is a diagram illustrating another training sequence code structure of a symbol length 31 constructed by modifying the training sequence code structure illustrated in FIG. 6;

FIG. 8A is a diagram illustrating TSCs when there is no symbol delay (D=0) between a desired TSC and an interfering TSC in GERAN;

FIG. 8B is a diagram illustrating TSCs when there is a symbol delay (D>0) between a desired TSC and an interfering TSC in GERAN;

FIG. 8C is a diagram illustrating TSCs when there is a symbol delay (D<0) between a desired TSC and an interfering TSC in GERAN;

FIG. 9 is a diagram illustrating a procedure for generating a full set of periodic training sequence codes according to an embodiment of the present invention;

FIG. 10 is a diagram illustrating a procedure of a Min-Ave algorithm for generating an optimized subset of periodic TSCs;

FIG. 11 is a diagram illustrating a set of binary TSCs having a 26-symbol length according to an embodiment of the present invention;

FIG. 12 is a diagram illustrating a set of binary TSCs having a 30-symbol length according to an embodiment of the present invention;

FIG. 13A is a diagram illustrating a set of binary TSCs having a 31-symbol length according to the structure shown in FIG. 7A; and

FIG. 13B is a diagram illustrating a set of binary TSCs having a 31-symbol length according to the structure shown in FIG. 7B.

## DETAILED DESCRIPTION OF THE PREFERRED EMBODIMENTS

Preferred embodiments of the present invention will now be described in detail with reference to the annexed drawings. In the following description, a detailed description of known functions and configurations incorporated herein has been omitted for clarity and conciseness. Terms used herein are defined based on functions in the present invention and may vary according to users, operators' intention, or usual practices. Therefore, the definition of the terms should be made based on contents throughout the specification.

In designing TSCs to be applied to the GERAN system and GERAN system, the present invention considers all autocorrelation and cross-correlation properties and an influence of the properties on the interfering TSC delays, and uses a periodic TSC exhaustive computer search technique to search for an appropriate TSC. Further, in order to evaluate correlation properties among multiple sequences, Signal-to-Noise Ratio (SNR) degradation is introduced as a criterion. Moreover, in order to find binary TSCs having excellent cross-correlation properties, a Minimum-Average (Min-Ave) optimization method is introduced.

A description will first be made of a TSC arrangement structure according to an embodiment of the present invention.

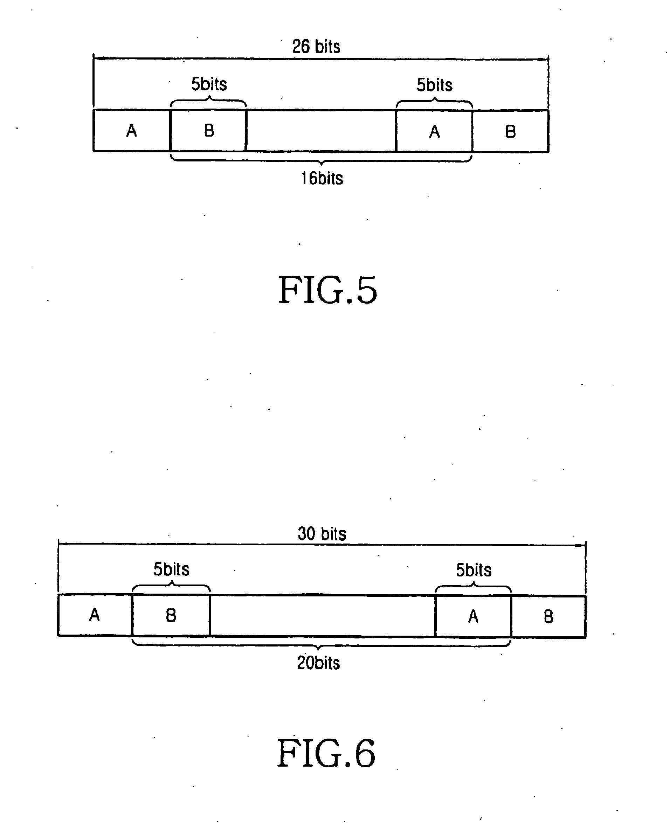

Analyzing the GSM/EDGE standard document 3GPP TS 45.002, the conventional TSC arrangement structure of a symbol length 26 is illustrated in FIG. 5. Specifically, a TSC of a symbol length 26 (N=26) can be expressed as shown in Equation (1).

$$x = (x_1, x_2, \ldots, x_{26}) = (a_{12}, \ldots, a_{16}, a_1, \ldots a_5, a_6, \ldots, a_{11}, a_{12}, \ldots, a_{16}, a_1, \ldots, a_5) \qquad \ldots . (1)$$

As shown in Equation (1), a TSC x is constructed in a periodic fashion by copying the last 5 symbols (or bits) A of the reference sequence ($\alpha_1,\alpha_2,...,\alpha_{16}$) composed of 16 symbols (or bits) and arranging them in the Most Significant Positions (MSPs) as a guard sequence, and by copying the first 5 symbols (or bits) of the reference sequence ($\alpha_1,\alpha_2,..., \alpha_{16}$) and arranging them to the Least Significant Positions (LSPs) as a guard sequence. The TSC x satisfies autocorrelation coefficients of Equation (2).

$$R_x(k) = \sum_{n=1}^{16} x_{n+5} x_{n+5+k} = 0, \text{ for } k = -5,...,5, k \neq 0 \qquad \ldots \ldots \ldots (2)$$

The autocorrelation coefficients of Equation (2) have the optimal autocorrelation properties for the range of non-zero shifts of an interested interval. Therefore, they have the properties that they are robust against interferer delays. In addition, up to six channel tap coefficients can be estimated with a simple correlator.

The present invention extends the conventional TSC structure of GSM/EDGE not only to FIG. 5 but also to the TSC structure of symbol lengths 30 and 31 suitable to a data rate of 325 Ksymbols/s.

FIG. 6 illustrates a training sequence code structure of a symbol length 30 constructed by extending the conventional training sequence code structure. As illustrated in FIG. 6, for the TSC of a symbol length 30, its reference sequence has a symbol length 20.

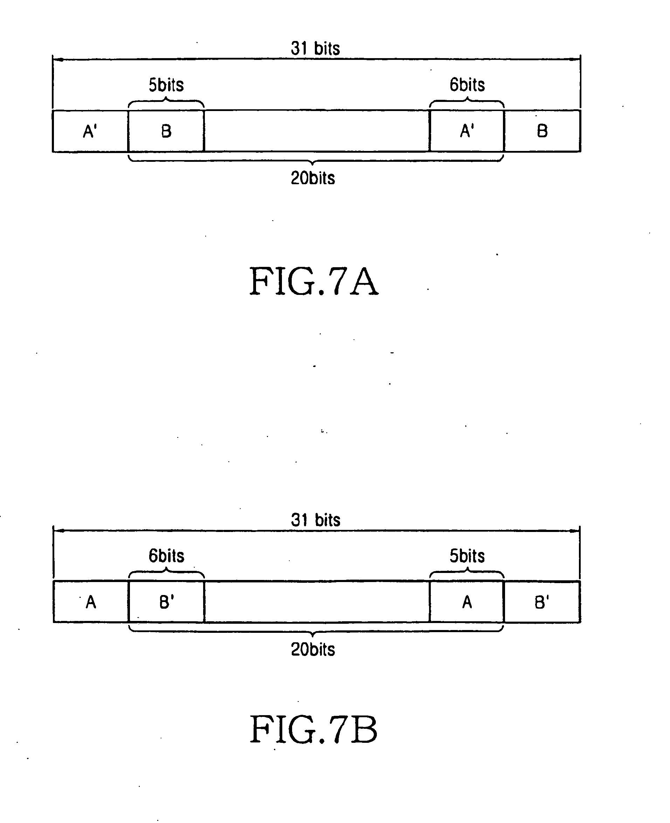

FIG. 7A illustrates a training sequence code structure having a symbol length of 31 constructed by modifying the training sequence code structure of FIG. 6, and FIG. 7B illustrates another training sequence code structure having a symbol length of 31. The TSCs having a symbol length 31, illustrated in FIGs. 7A and 7B, also use the reference sequence of a symbol length 20, which is equal to that of a symbol length 30.

Before a description is given of a method for finding 8 sequences having symbol lengths 16 and 20, used for the reference sequences of the TSCs, Co-Channel Interference (CCI) for the symbol delay will be described.

In order to raise the spectral efficiency, as many carrier frequencies as possible should be reused. However, increasing carrier frequency reuse increases CCI in the networks. Therefore, to accurately estimate channel coefficients, it is preferable to use TSCs having both good autocorrelation and cross-correlation properties. However, the conventional TSCs used in GSM/EDGE are designed without considering their cross-correlation properties. When L-tap fading channels are considered, there is a possible symbol delay between a desired signal and an interfering signal in the synchronous network. In the common GSM network, a symbol delay (hereinafter denoted by 'D') of an interfering signal can be considered to be uniformly distributed within a range of [-1, 4] symbols. When D is considered, only the overlapped symbols between the desired TSC and interfering TSC can be used for joint channel estimation.

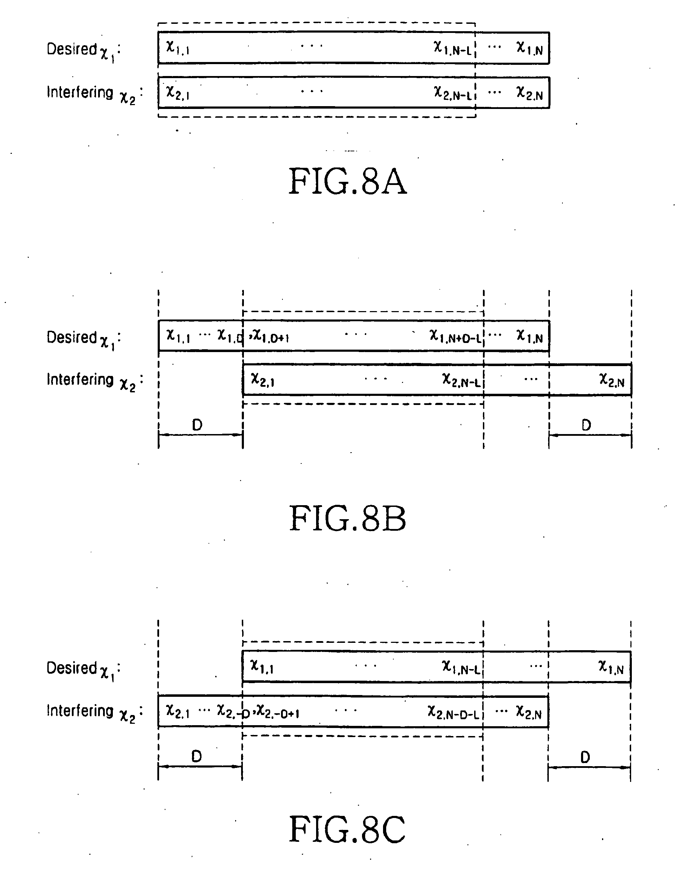

FIGs. 8A to 8C illustrate TSCs for when joint channel estimation is performed taking different possible interferer delays into consideration. It is assumed in FIGs. 8A to 8C that $x_1$ represents the desired sequence and $x_2$ represents the interference sequence. FIG. 8A illustrates a scenario for D=0 (i.e., no delay), FIG. 8B illustrates a scenario for D>0, and FIG. 8C illustrates a scenario for D<0. The conventional TSCs used for GSM/EDGE, illustrated in FIG. 5, are robust against interferer delays, and maintain their optimal autocorrelation properties even when the interferer delays are considered. As stated above, however, for the conventional TSCs, the cross-correlation properties are not considered.

To evaluate the cross-correlation properties between multiple sequences, SNR degradation (hereinafter denoted by $d_{SNR}$(dB)) can be used. $d_{SNR}$ is expressed as shown in Equation (3).

$$d_{SNR} = 10 \cdot \log_{10}\left(1 + tr(\Phi^{-1})\right) \qquad \ldots \ldots (3)$$

In Equation (3), $tr(\Phi^{-1})$ denotes a sum of main diagonal elements in matrix $\Phi^{-1}$. As $d_{SNR}$ is lower, the cross-correlation properties of TSCs are superior.

Assuming that one interfering signal exists for each cell in the cellular communication system, mutual cross-correlation properties between TSCs should be optimized for joint channel estimation. If L(=5)-tap channel impulse responses of the carrier signal and the interfering signal are defined as $h_l = (h_{l,1},h_{l,2},...,h_{l,L+1})$, $l$ = 1,2, the channel impulse responses for two co-channel signals can be defined as $\tilde{h} = [h_1\ h_2]$. Two training sequences $x_l = (x_{l,1},...x_{l,N})$, $l$ = 1, 2 are considered, and a TSC matrix is defined as $\tilde{X} = [X_1\ X_2]$ where the matrices $X_l$, $l$ = 1, 2, correspond to interferer delays for $x_l$. The received signal y with consideration of CCI is $y = Xh^t + n$, and as a result, the least square channel estimate can be calculated as shown in Equation (4).

$$\hat{h} = (\tilde{X}^t \tilde{X})^{-1} \tilde{X}^t y \qquad \ldots \ldots \ldots (4)$$

In Equation (4), $X'$ is the conjugate transpose of $X$. A correlation matrix necessary for calculating $d_{SNR}$ in Equation (3) is $\Phi = \tilde{X}^t \tilde{X}$.

Referring to FIGs. 8A and 8B, for an interferer delay $D \geq 0$, matrixes $X_1$ and $X_2$ are generated as shown in Equation (5) and Equation (6), respectively.

$$X_1 = \begin{pmatrix} x_{1,D+6} & \cdots & x_{1,D+2} & x_{1,D+1} \\ x_{1,D+7} & \cdots & x_{1,D+3} & x_{1,D+2} \\ \vdots & \vdots & \vdots & \vdots \\ x_{1,N+D-5} & \cdots & x_{1,N+D-9} & x_{1,N+D-10} \end{pmatrix}_{(N-2L)\times(L+1)} \qquad \cdots \cdots \cdots (5)$$

$$X_2 = \begin{pmatrix} x_{2,6} & \cdots & x_{2,2} & x_{2,1} \\ x_{2,7} & \cdots & x_{2,3} & x_{2,2} \\ \vdots & \vdots & \vdots & \vdots \\ x_{2,N-5} & \cdots & x_{2,N-9} & x_{2,N-10} \end{pmatrix}_{(N-2L)\times(L+1)} \qquad \cdots \cdots \cdots (6)$$

Similarly, when $D < 0$, matrices $X_1$ and $X_2$ can be constructed based on FIG. 8C, so mathematical expression thereof will be omitted.

The present invention relates to new TSCs having two level signals. To maintain good autocorrelation properties against interferer delays of TSCs used in GSM/EDGE, new periodic TSCs proposed in the present invention adopt the TSC structure illustrated in FIGs. 7A and 7B to which the conventional TSC structure used in GSM/EDGE, illustrated in FIG. 6, and its extended structure are applied. That is, the periodic TSCs can be expressed as shown in Equation (7) which is in a form generalized from Equation (1).

$$x = (x_1, x_2, \ldots, x_N) = (a_{N-2L-4}, \ldots, a_{N-2L}a_1, \ldots a_5, a_6, \ldots, a_{N-2L-5}, a_{N-2L-4}, \ldots, a_{N-2L}, a_1, \ldots, a_5) \quad \cdots (7)$$

Herein, a description will provided for a method for searching for TSCs optimized with consideration of interferer delays according to an embodiment of the present invention. The embodiment of the present invention provides a method for generating 8 different TSCs having a 26-symbol length, 8 different TSCs having a 30-symbol length, and 8 different TSCs having a 31-symbol length, all of which can be used in the GERAN system. Although an exhaustive computer search method and a Min-Ave algorithm will be used in the description of the embodiment of the present invention, other methods can also be used herein as a method for obtaining a full set of TSC candidates and selecting 8 TSCs from them.

Step 1: Through an exhaustive computer search method, a full set of periodic TSCs candidates can be obtained, in which the autocorrelations of each sequence satisfy Equation (8).

$$R_x(k) = \sum_{n=1}^{N-2L} x_{n+5} x_{n+5+k} = 0, \text{ for } k = -L, \ldots, L, k \neq 0 \qquad \cdots (8)$$

In Equation (8), N denotes a symbol length of the TSC, and the reference sequence is $(\alpha_1 \alpha_2, \ldots, \alpha_{N-2L})$. Reference sequences of even symbol lengths also satisfy Equation (7). For $L = 5$, available sequence lengths include $N = 26$ and $N = 30$, and the total number of TSC candidates belonging to the full-set TSC of sequence lengths 26 and 30 is 512 and 5440, respectively. Since a change in sign for each symbol in a sequence will not affect the autocorrelation and cross-correlation properties, only a half of the TSC candidates belonging to the full-set TSC are used for optimization of cross-correlation properties of TSCs.

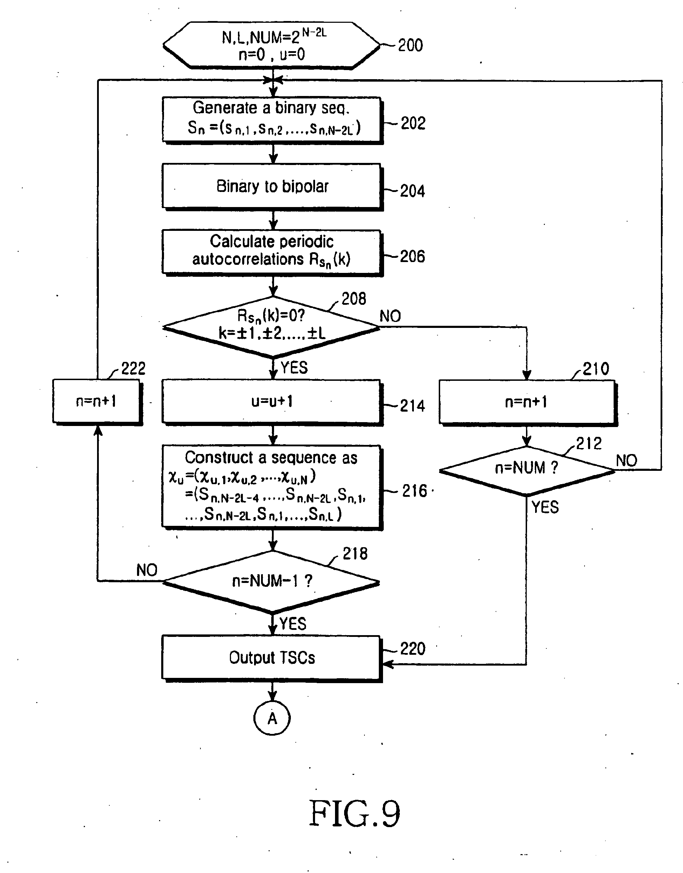

FIG. 9 illustrates a procedure for generating a full set of periodic training sequence codes according to an embodiment of the present invention. Referring to FIG. 9, the exhaustive computer search method sets initial values of N, L, NUM, n, and u in step 200, and generates a binary sequence $S_n$ in step 202. The exhaustive computer search method changes the binary sequence to a bipolar sequence in step 204, and calculates periodic autocorrelations $R_{sn}$ (k) of the sequences in step 206. The exhaustive computer search method checks $R_{sn}$ (k) in step 208, and if the

autocorrelation $R_{sn}$ (k) is not 0, the exhaustive computer search method increase n by 1 in step 210, and then compares n with NUM in step 212. In step 212, if n≠NUM, the exhaustive computer search method returns to step 202, and if n=NUM, the exhaustive computer search method outputs the changed bipolar sequences as training sequence codes in step 220.

However, in step 208, if the autocorrelation $R_{sn}$ (k) is 0, the exhaustive computer search method increases u by 1 in step 214, and generates a training sequence code according to Equation (7) in step 216. The exhaustive computer search method compares n with NUM-1 in step 218. If n≠NUM-1, the exhaustive computer search method increases n by 1 in step 222, and then returns to step 202. However, in step 218, if n=NUM-1, the exhaustive computer search method outputs the generated training sequence codes in step 220.

Step 2: A TSC subset composed of a required number of TSCs is obtained by optimizing cross-correlations of the full-set TSCs. The optimization process uses the Min-Ave algorithm, which minimizes the TSC subset mean value of $d_{SNR}$ from the full set of TSCs.

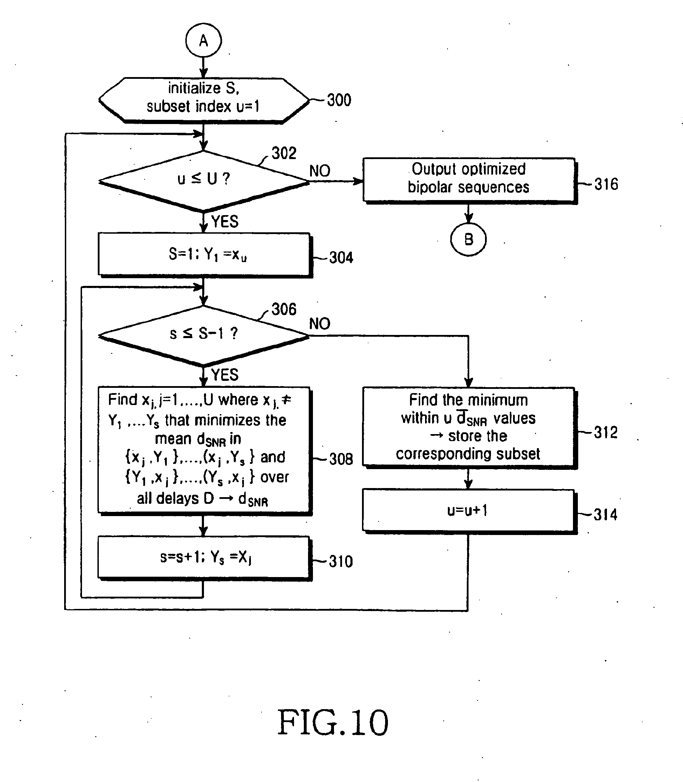

FIG. 10 illustrates a procedure of a Min-Ave algorithm. In FIG. 10, a subset and a full set of TSCs are denoted by S and U, respectively. After the Min-Ave algorithm is performed, a required number of TSCs are stored finally. For example, GSM/EDGE needs 8 TSCs.

Referring to FIG. 10, the Min-Ave algorithm initializes S and sets an initial value of a subset index u to 1 in step 300. The Min-Ave algorithm compares u with U in step 302, and if u≤U, the Min-Ave algorithm sets s to 1 and sets $Y_1$ to $x_u$ in step 304. The Min-Ave algorithm compares s with S-1 in step 306. If s≤S-1, the Min-Ave algorithm finds, in step 308, $x_j$ (j=1,..,U, where $x_j \neq Y_1$,.., Ys) that minimizes the mean $d_{SNR}$ according to Equation (9) below. In step 310, the Min-Ave algorithm increases s by 1 and sets $Y_S$ to $x_j$, and then returns to step 306.

$$\text{Find } x_{j,} j=1,..,U, \text{ where } x_j \neq Y_1,..,Y_S, \text{ that minimizes the mean } d_{SNR} \text{ in } \{x_j, Y_1\},..,$$
$$\{x_j, Y_S\} \text{ and } \{Y_1, x_j\},..,\{Y_S, x_j\} \text{ over all delays } D \Rightarrow d_{SNR}$$
$$\cdots\cdots\cdots (9)$$

However, if it is determined in step 306 that s>S-1, the Min-Ave algorithm performs Equation (10) in step 312, and increases u by 1 in step 314, and then returns to step 302.

$$\text{Find the minimum within u } \overline{d_{SNR}} \text{ values} \Rightarrow \text{store the corresponding subset}$$
$$\cdots\cdots (10)$$

However, if it is determined in step 302 that u>U, the Min-Ave algorithm outputs the optimized binary sequences in step 316.

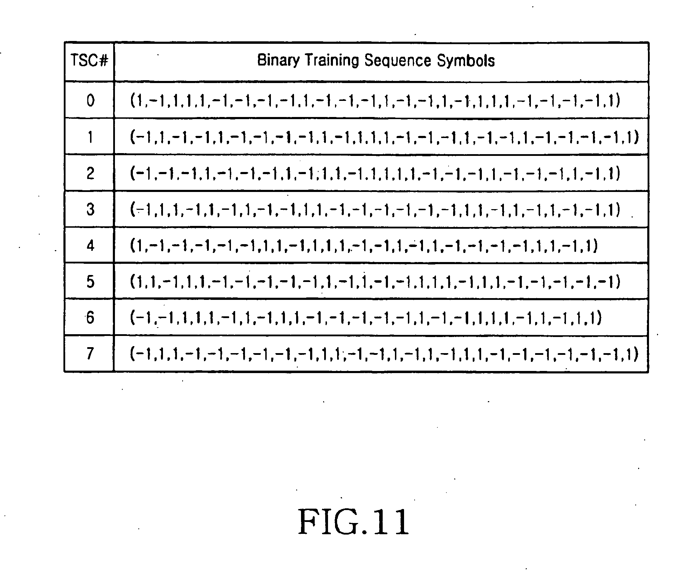

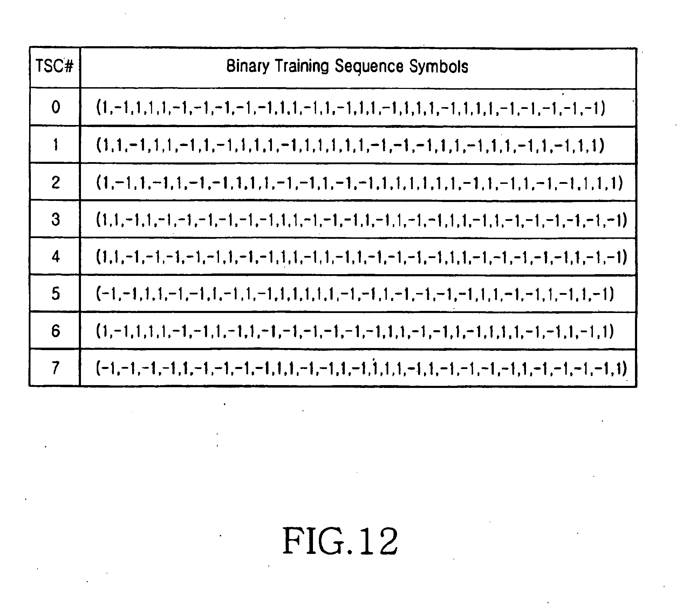

Step 3: Based on the reference sequences of 16 or 20-symbol length, found in Step 1 and Step 2, TSCs of 26 or 30-symbol length are constructed according to the TSC arrangement structure illustrated in FIG. 5 or 6. FIGs. 11 and 12 illustrate TSC sets of symbol lengths 26 and 30, respectively.

It is possible to construct TSCs of a 31-symbol length suitable for the high symbol rate of 325 Ksymbols/s according to the structures illustrated in FIGs. 7A and 7B.

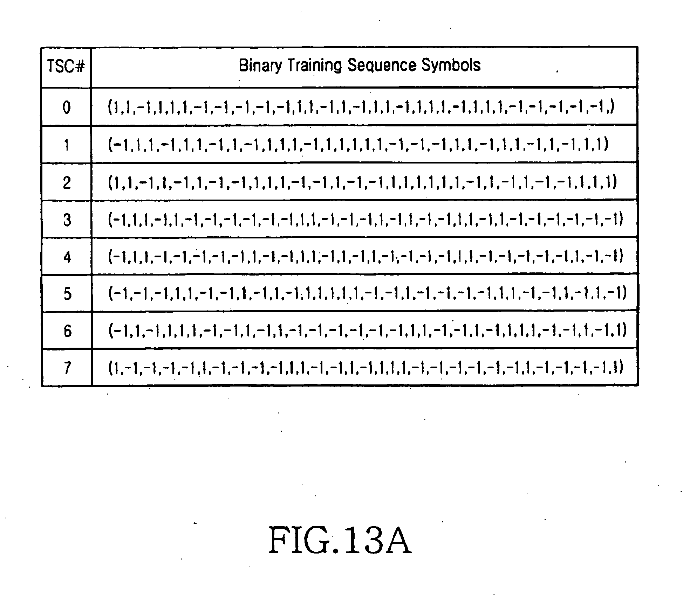

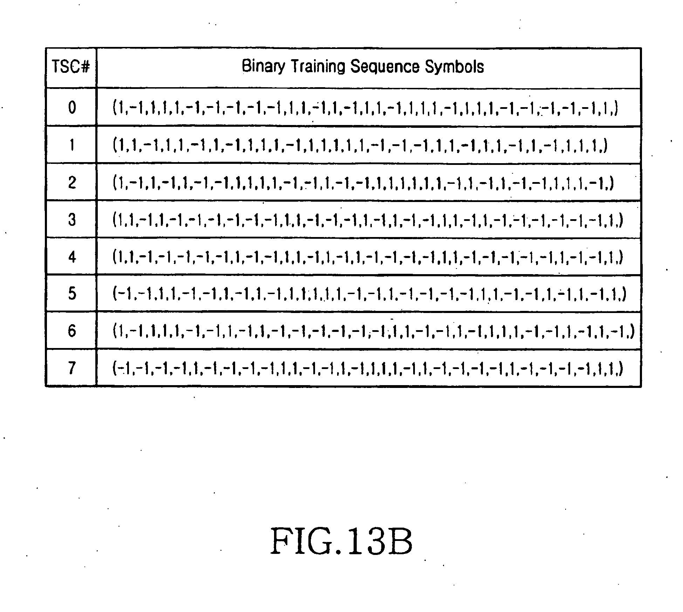

FIGs. 13A and 13B illustrate exemplary sets of TSCs constructed according to the structures illustrated in FIGs. 7A and 7B, using the reference sequences of a 20-symbol length, respectively.

As is apparent from the foregoing description, the present invention provides TSCs with consideration of autocorrelation properties and cross-correlation properties. The use of the TSCs constructed with consideration of cross-correlation properties enables efficient data transmission/reception without performance reduction in the GERAN system. In addition, the TSCs proposed by the present invention can be applied on an extended basis even to 16-QAM and 32-QAM adopted by the GERAN system.

While the present invention has been shown and described with reference to certain preferred embodiments thereof, it will be understood by those skilled in the art that various changes in form and details may be made therein without departing from the scope of the present invention as defined by the appended claims.

**Claims**

1. A method for generating training sequence codes in a communication system, the method comprising:

   obtaining a full set of training sequence code candidates;
   obtaining a subset for necessary training sequence codes among the training sequence code candidates by optimizing cross-correlation properties of training sequence codes for the full set, wherein the optimizing minimizes the subset mean value of Signal-to-Noise Ratio degradation;
   defining each of training sequence codes in the obtained subset as a reference sequence; and
   generating optimized training sequence codes by copying symbols of a predetermined number of bits located in a front portion of the reference sequence, arranging the copied symbols in Most Significant Positions MSPs as a guard sequence, copying symbols of a predetermined number of bits located in a rear portion of the reference sequence, and arranging the copied symbols in Least Significant Positions LSPs as a guard sequence.

2. The method of claim 1, wherein in generating the optimized training sequence codes, the reference sequence includes 16 bits, and each of the guard sequences arranged in the MSP and the LSP includes 5 bits.

3. The method of claim 1, wherein in generating the optimized training sequence codes, the reference sequence includes 20 bits, and the guard sequences arranged in the MSP and the LSP include 5 bits and 6 bits, respectively.

4. The method of claim 1, wherein in generating the optimized training sequence codes, the reference sequence includes 20 bits, and the guard sequences arranged in the MSP and the LSP include 6 bits and 5 bits, respectively.

5. The method of claim 1, wherein the training sequence code candidates satisfy:

$$x = (x_1, x_2, ..., x_N) = (a_{N-2L-4}, ..., a_{N-2L}a_1, ... a_5, a_6, ..., a_{N-2L-5}, a_{N-2L-4}, ... a_{N-2L}, a_1, ..., a_5),$$

where L denotes a number of signal taps, and N denotes a number of bits of the training sequence code.

**Patentansprüche**

1. Verfahren zum Erzeugen von Trainingssequenzcoden in einem Kommunikationssystem, wobei das Verfahren umfasst:

   Ermitteln eines vollen Satzes von Trainingssequenzcodekandidaten;
   Ermitteln eines Teilsatzes für notwendige Trainingssequenzcodes unter den Trainingssequenzcodekandidaten durch Optimieren von Kreuzkorrelationseigenschaften von Trainingssequenzcodes für den vollen Satz, wobei das Optimieren den Teilsatzmittelwert der Signal-zu-Rausch-Verhältnis-Verschlechterung minimiert;
   Definieren eines jeden von Trainingssequenzcodes in dem ermittelten Teilsatz als Referenzsequenz; und
   Erzeugen von optimierten Trainingssequenzcodes durch Kopieren von Symbolen einer vorbestimmten Anzahl von Bits, die sich in einem vorderen Abschnitt der Referenzsequenz befinden, Anordnen der kopierten Symbole in den höchstwertigen Positionen (Most Significant Positions) MSPs als Schutzsequenz, Kopieren von Symbolen einer vorbestimmten Anzahl von Bits, die sich in einem hinteren Abschnitt der Referenzsequenz befinden, und Anordnen der kopierten Symbole in niedrigstwertigen Positionen (Least Significant Positions) LSPs als Schutzsequenz.

2. Verfahren nach Anspruch 1, wobei beim Erzeugen der optimierten Trainingssequenzcodes die Referenzsequenz 16 Bit enthält und jede der in dem MSP und dem LSP angeordneten Schutzsequenzen 5 Bit enthält.

3. Verfahren nach Anspruch 1, wobei beim Erzeugen der optimierten Trainingssequenzcodes die Referenzsequenz 20 Bit enthält und die in dem MSP und dem LSP angeordneten Schutzsequenzen 5 Bit beziehungsweise 6 Bit enthalten.

4. Verfahren nach Anspruch 1, wobei beim Erzeugen der optimierten Trainingssequenzcodes die Referenzsequenz 20 Bit enthält und die in dem MSP und dem LSP angeordneten Schutzsequenzen 6 Bit beziehungsweise 5 Bit enthalten.

**5.** Verfahren nach Anspruch 1, wobei die Trainingssequenzcodekandidaten erfüllen:

$$x = (x_1, x_2, ..., x_N) = (a_{N-2L-4}, ..., a_{N-2L}a_1, ... a_5, a_6, ..., a_{N-2L-5}, a_{N-2L-4}, ... a_{N-2L}a_1, ..., a_5),$$

wobei L eine Anzahl von Signaltaps bezeichnet, und N eine Anzahl von Bits des Trainingssequenzcodes bezeichnet.

**Revendications**

**1.** Procédé pour générer des codes de séquence de formation dans un système de communication, le procédé comprenant les étapes consistant à :

- obtenir un ensemble complet de candidats de codes de séquence de formation;
- obtenir un sous-ensemble de codes de séquence de formation nécessaires parmi les candidats de codes de séquence de formation en optimisant des propriétés de corrélation croisée de codes de séquence de formation pour l'ensemble complet, pour lequel l'optimisation minimise la valeur moyenne du sous-ensemble de la dégradation du rapport signal/bruit ;
- définir chacun des codes de séquence de formation du sous-ensemble obtenu comme étant une séquence de référence ; et
- générer des codes de séquence de formation optimisés en copiant les symboles d'un nombre prédéterminé de bits situés dans une partie avant de la séquence de référence, en disposant les symboles copiés dans des positions les plus significatives (MSP) en tant que séquence de protection, en copiant les symboles d'un nombre prédéterminé de bits situés dans une partie arrière de la séquence de référence et en disposant les symboles copiés dans des positions les moins significatives (LSP) en tant que séquence de protection.

**2.** Procédé selon la revendication 1, pour lequel, lors de la génération des codes de séquence de formation optimisés, la séquence de référence comprend 16 bits et chacune des séquences de protection disposées dans les MSP et les LSP comprend 5 bits.

**3.** Procédé selon la revendication 1, pour lequel, lors de la génération des codes de séquence de formation optimisés, la séquence de référence comprend 20 bits et les séquences de protection disposées dans les MSP et les LSP comprennent 5 bits et 6 bits, respectivement.

**4.** Procédé selon la revendication 1, pour lequel, lors de la génération des codes de séquence de formation optimisés, la séquence de référence comprend 20 bits et les séquences de protection disposées dans les MSP et les LSP comprennent 6 bits et 5 bits, respectivement.

**5.** Procédé selon la revendication 1, pour lequel les candidats de codes de séquence de formation satisfont à :

$$x = (x_1, x_2, ..., x_N) = (a_{N-2L-4}, ..., a_{N-2L}a_1, ... a_5, a_6, ..., a_{N-2L-5}, a_{N-2L-4}, ... a_{N-2L}a_1, ..., a_5),$$

où L désigne un nombre de prélèvements de signaux et N désigne un nombre de bits du code de séquence de formation.

FIG.1

EP 1 983 708 B1

FIG.2

156.25 symbols = 0.577 ms

| TB 3 | Encrypted Data 58 | TSC 26 | Encrypted Data 58 | TB 3 | GP 8.25 |
|------|-------------------|--------|-------------------|------|---------|

FIG.3

187.5 symbols = 0.577 ms

| TB 3 | Encrypted Data 71 | TSC 31 | Encrypted Data 71 | TB 3 | GP 8.5 |

| TB 4 | Encrypted Data 69 | TSC 31 | Encrypted Data 69 | TB 4 | GP 10.5 |

# FIG.4

26 bits

5bits 5bits

| A | B | | A | B |

16bits

# FIG.5

30 bits

5bits 5bits

| A | B | | A | B |

20bits

# FIG.6

FIG.7A

FIG.7B

Desired $\chi_1$: | $\chi_{1,1}$ | $\cdots$ | $\chi_{1,N-L}$ | $\cdots$ | $\chi_{1,N}$ |

Interfering $\chi_2$: | $\chi_{2,1}$ | $\cdots$ | $\chi_{2,N-L}$ | $\cdots$ | $\chi_{2,N}$ |

## FIG.8A

Desired $\chi_1$: | $\chi_{1,1}$ $\cdots$ $\chi_{1,D}$ | $\chi_{1,D+1}$ | $\cdots$ | $\chi_{1,N+D-L}$ | $\cdots$ | $\chi_{1,N}$ |

Interfering $\chi_2$: | $\chi_{2,1}$ | $\cdots$ | $\chi_{2,N-L}$ | $\cdots$ | $\chi_{2,N}$ |

$D$       $D$

## FIG.8B

Desired $\chi_1$: | $\chi_{1,1}$ | $\cdots$ | $\chi_{1,N-L}$ | $\cdots$ | $\chi_{1,N}$ |

Interfering $\chi_2$: | $\chi_{2,1}$ $\cdots$ $\chi_{2,-D}$ | $\chi_{2,-D+1}$ | $\cdots$ | $\chi_{2,N-D-L}$ | $\cdots$ | $\chi_{2,N}$ |

$D$       $D$

## FIG.8C

FIG.9

A

initialize S,
subset index u=1 ——300

302

u ≤ U ?    NO    →    Output optimized
bipolar sequences ——316

YES

B

S=1; Y₁ =xᵤ ——304

306    NO

s ≤ S−1 ?

YES

Find xⱼ, j=1,...,U where xⱼ ≠
Y₁ ,...Yₛ that minimizes the
mean $d_{SNR}$ in
$\{x_j ,Y_1 \}$,...,$(x_j ,Y_s \}$ and
$\{Y_1 ,x_j \}$,...,$(Y_s ,x_j \}$ over
all delays D → $d_{SNR}$ ——308

Find the minimum
within u $\overline{d}_{SNR}$ values
→ store the
corresponding subset ——312

s=s+1; Yₛ =Xⱼ ——310

u=u+1 ——314

# FIG.10

| TSC# | Binary Training Sequence Symbols |
|------|----------------------------------|
| 0 | (1,-1,1,1,1,-1,-1,-1,-1,1,-1,-1,-1,1,-1,-1,1,-1,1,1,1,-1,-1,-1,-1,1) |
| 1 | (-1,1,-1,-1,1,-1,-1,-1,-1,1,-1,1,1,1,-1,-1,-1,1,-1,-1,1,-1,-1,-1,-1,1) |
| 2 | (-1,-1,-1,1,-1,-1,-1,1,-1,1,1,-1,1,1,1,1,-1,-1,-1,1,-1,-1,-1,1,-1,1) |
| 3 | (-1,1,1,-1,1,-1,1,-1,-1,1,1,-1,-1,-1,-1,-1,-1,1,1,-1,1,-1,1,-1,-1,1) |
| 4 | (1,-1,-1,-1,-1,-1,1,1,-1,1,1,1,-1,-1,1,-1,1,-1,-1,-1,-1,1,1,1,-1,1) |
| 5 | (1,1,-1,1,1,-1,-1,-1,-1,-1,1,-1,1,-1,-1,1,1,1,1,-1,1,1,-1,-1,-1,-1,-1) |
| 6 | (-1,-1,1,1,1,-1,1,-1,1,1,-1,-1,-1,-1,-1,1,-1,-1,1,1,1,1,-1,1,-1,1,1) |
| 7 | (-1,1,1,-1,-1,-1,-1,-1,-1,1,1,1,-1,-1,1,-1,1,-1,1,1,-1,-1,-1,-1,-1,-1,1) |

# FIG.11

| TSC# | Binary Training Sequence Symbols |
|------|----------------------------------|
| 0 | (1,-1,1,1,1,-1,-1,-1,-1,-1,1,1,-1,1,-1,1,1,-1,1,1,1,1,-1,1,1,1,-1,-1,-1,-1,-1) |
| 1 | (1,1,-1,1,1,-1,1,-1,1,1,1,1,-1,1,1,1,1,1,1,-1,-1,-1,1,1,-1,1,1,-1,1,-1,1,1) |
| 2 | (1,-1,1,-1,1,-1,-1,1,1,1,1,-1,-1,1,-1,-1,1,1,1,1,1,1,1,-1,1,-1,1,-1,-1,1,1,1) |
| 3 | (1,1,-1,1,-1,-1,-1,-1,-1,-1,1,1,-1,-1,-1,1,1,-1,1,-1,-1,1,1,-1,1,-1,-1,-1,-1,-1,-1,-1) |
| 4 | (1,1,-1,-1,-1,-1,-1,1,-1,-1,1,1,-1,1,-1,1,1,-1,-1,-1,-1,1,1,-1,-1,-1,-1,-1,1,1,-1,-1) |
| 5 | (-1,-1,1,1,-1,-1,1,1,-1,1,1,-1,1,1,1,1,1,1,-1,-1,1,1,-1,-1,-1,-1,1,1,1,-1,-1,1,1,-1,1,1,-1) |
| 6 | (1,-1,1,1,1,-1,-1,1,1,-1,1,1,-1,-1,-1,-1,-1,1,1,1,-1,-1,1,1,-1,1,1,1,1,-1,-1,1,1,-1,1) |
| 7 | (-1,-1,-1,-1,1,-1,-1,-1,-1,1,1,1,-1,-1,1,1,-1,1,1,1,1,-1,1,1,-1,-1,-1,-1,1,1,-1,-1,-1,-1,1,1) |

# FIG.12

| TSC# | Binary Training Sequence Symbols |
|------|----------------------------------|
| 0 | (1,1,-1,1,1,1,-1,-1,-1,-1,-1,1,1,-1,1,-1,1,1,-1,1,1,1,-1,1,1,1,-1,-1,-1,-1,-1,) |
| 1 | (-1,1,1,-1,1,1,-1,1,-1,1,1,1,-1,1,1,1,1,1,-1,-1,-1,1,1,-1,1,1,-1,1,-1,1,1) |
| 2 | (1,1,-1,1,-1,1,-1,-1,1,1,1,-1,-1,1,-1,-1,1,1,1,1,1,1,-1,1,-1,1,-1,-1,1,1,1) |
| 3 | (-1,1,1,-1,1,-1,-1,-1,-1,-1,1,1,-1,-1,-1,1,1,-1,1,-1,-1,1,1,-1,1,-1,-1,-1,-1,-1,-1) |
| 4 | (-1,1,1,-1,-1,-1,-1,-1,1,-1,-1,1,1,-1,1,-1,1,-1,-1,-1,-1,1,1,-1,-1,-1,-1,-1,1,-1,-1) |
| 5 | (-1,-1,-1,1,1,-1,-1,1,-1,1,-1,1,1,1,1,1,1,-1,-1,1,-1,-1,-1,-1,1,1,-1,-1,1,-1,1,-1) |
| 6 | (-1,1,-1,1,1,1,-1,-1,1,-1,1,1,-1,-1,-1,-1,-1,-1,1,1,1,-1,-1,1,1,-1,1,1,1,1,-1,-1,1,-1,1) |
| 7 | (1,-1,-1,-1,-1,1,-1,-1,-1,-1,1,1,1,-1,-1,1,1,-1,1,1,1,-1,-1,-1,-1,-1,1,1,-1,-1,-1,-1,1,1) |

# FIG.13A

| TSC# | Binary Training Sequence Symbols |
|------|----------------------------------|
| 0 | (1,-1,1,1,1,-1,-1,-1,-1,-1,1,1,-1,1,-1,1,1,-1,1,1,1,-1,1,1,1,-1,-1,-1,-1,-1,1,) |
| 1 | (1,1,-1,1,1,-1,1,-1,1,1,1,-1,1,1,1,1,1,-1,-1,-1,1,1,-1,1,1,-1,1,-1,1,1,1,) |
| 2 | (1,-1,1,-1,1,-1,-1,1,1,1,1,-1,-1,1,-1,-1,1,1,1,1,1,1,-1,1,-1,1,-1,-1,1,1,1,-1,) |
| 3 | (1,1,-1,1,-1,-1,-1,-1,-1,-1,1,1,-1,-1,-1,1,1,-1,1,-1,-1,1,1,-1,1,-1,-1,-1,-1,-1,1,) |
| 4 | (1,1,-1,-1,-1,-1,-1,1,-1,-1,1,1,-1,1,-1,1,-1,-1,-1,-1,1,1,-1,-1,-1,-1,-1,1,1,-1,-1,1,) |
| 5 | (-1,-1,1,1,-1,-1,1,-1,1,-1,1,1,1,1,1,1,-1,-1,1,-1,-1,-1,-1,1,1,-1,-1,1,-1,1,1,-1,1,) |
| 6 | (1,-1,1,1,1,-1,-1,1,-1,1,-1,-1,-1,-1,-1,-1,1,1,-1,-1,1,-1,1,1,1,1,-1,-1,1,-1,1,1,-1,) |
| 7 | (-1,-1,-1,-1,1,-1,-1,-1,-1,1,1,-1,-1,1,-1,1,1,1,1,-1,1,-1,-1,-1,-1,1,1,-1,-1,-1,-1,1,1,) |

# FIG.13B

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 200712752